## Europäisches Patentamt
## European Patent Office
## Office européen des brevets

(19)

(11) Publication number: **0 057 828**

A1

(12) **EUROPEAN PATENT APPLICATION**

(21) Application number: **82100312.6**

(22) Date of filing: **18.01.82**

(51) Int. Cl.³: **G 02 B 7/26**

(30) Priority: **05.02.81 CA 370210**

(43) Date of publication of application:
**18.08.82 Bulletin 82/33**

(84) Designated Contracting States:
**DE FR GB**

(71) Applicant: **NORTHERN TELECOM LIMITED**
**1600 Dorchester Boulevard West**
**Montreal Quebec H3H 1R1(CA)**

(72) Inventor: **Finn, Roger Colin**
**56 Meadowbank Drive**
**Nepean Ontario, K2G 0N9(CA)**

(72) Inventor: **MacKenzie, Morley Scott**
**Box 1401 1233 Colonel By Drive**
**Ottawa Ontario, K1S 5B7(CA)**

(74) Representative: **Jelly, Sidney T.**
**Langton House Market Street**
**Maidenhead Berkshire SL6 8BE(GB)**

(54) **A reinforced optical fiber splice.**

(57) An optical fiber splice formed by fusing the ends of two glass fibers in end-to-end alignment, is reinforced by using one or more splints (25), alongside the fusion position (15). The plastic coating (13) of each fiber (12) is removed prior to fusion and the splint, which can be of different forms, may overlap the coatings (13) of the fibers, or be positioned between the ends of the coatings (13), not overlapping. Splints in the form of rods (25), conveniently formed by uncoated lengths of glass fiber (15), the same as is fused, form efficient and flexible reinforcement. More than one splint may be used, and splints overlapping the coating (13) and splints extending between the ends of the coating (13) may be used in unison. The splint or splints (25), fused fibers (12) and coatings (13) are interconnected by a synthetic resin (21), preferably by encasing in the resin, as by molding.

FIG. 3

Croydon Printing Company Ltd.

This invention relates to reinforced optical fiber splices. The invention is particularly applicable to what are called factory splices, which are made in a factory or manufacturing environment for joining fibers end-to-end prior to assembly into cables or other structures. However the invention may also be applied to so-called field splices, where fibers are spliced end-to-end after installation, either as single fibers or in cables. Field splices are carried out to join optical fiber cables. The invention will be described more particularly from the aspect of "factory" splices, but the alternative use for "field" splices must also be born in mind.

Factory splicing of fibers is carried out for a variety of reasons, three of which are: a) to give long fiber lengths for making up long cables, and thus reducing the number of cable joins during installation; b) to join short lengths of fiber, otherwise too short to use commercially, and thus reduce waste and therefore cost; and c) to repair breaks in fibers when being made up into cables and other structures.

An optical fiber generally is composed of the signal conducting portion, for example of and having, in many instances, a core and cladding layer and a plastic coating. Fibers are spliced by fusing opposed ends of accurately aligned fibers. Prior to fusing, the plastic coating is removed. Removing the coating reduces the strength of the fiber to about 20% of the strength of the so-called "virgin" fiber. Fusion splicing further reduces the strength, to about 5% of the original. It appears that no coating applied after fusion raises the strength back to an acceptable value, in fact no increase at all usually occurs. It is desirable to raise the strength, after splicing, to at least about 10% of the original or·"virgin" fiber.  The strength of the original or virgin fiber is generally about 500 Ksi ($5 \times 10^5$ psi) and it would be useful to be able to raise the strength of a fiber at a splice to about 10% of this, i.e. about 50Ksi.

As will be apparent in the following discussion and description of certain embodiments, other requirements and characteristics, depending upon circumstances, arise.

The present invention provides a splice for a pair of optical fibers fused end-to-end in which one or more strengthening members, conveniently referred to as splints, are provided extending axially either side of the fusion position, the fused fibers and splint or splints being interconnected, as by being encased or coated in a synthetic resin, preferably thermo-setting, conveniently by moulding the resin around splices and splint.  The coating on each fiber is removed for a short distance from the splice position, and the splint, or splints, may extend only for the length of the uncoated fibers, or may extend over the end of the coating, or both.  The form of the splint may vary, as may also the material of the splint.  A particularly attractive form of splint is formed from short lengths of uncoated glass fiber, of the same form or type as the fibers being spliced.

The invention will be readily understood by the following description of certain embodiments, by way of example, in conjunction with the accompanying drawings, in which:-

Figure 1 is a longitudinal cross-section through a splice, with a metal sleeve;

Figure 2 is a cross-section similar to that of Figure 1, with a metal rod or filament as a splint;

3

0057828

Figures 3, 4, and 5 are cross-sections similar to that of Figure 1, illustrating various arrangements using glass fiber as splints;

Figure 6 is an exploded perspective view of one form of tool for preparing splices as illustrated in Figures 2 to 5;

Figure 7 is a cross-section, as on the line VII-VII of Figure 6, illustrating an assembled tool with a fiber in position;

Figures 8a, b, c and d are cross-sections, as on the line VIII-VIII of Figure 6, illustrating the various steps in encasing a fiber splice;

Figure 9 is a plan view of one member or part of a tool, illustrating an alternative form of manufacture as compared to Figure 6.

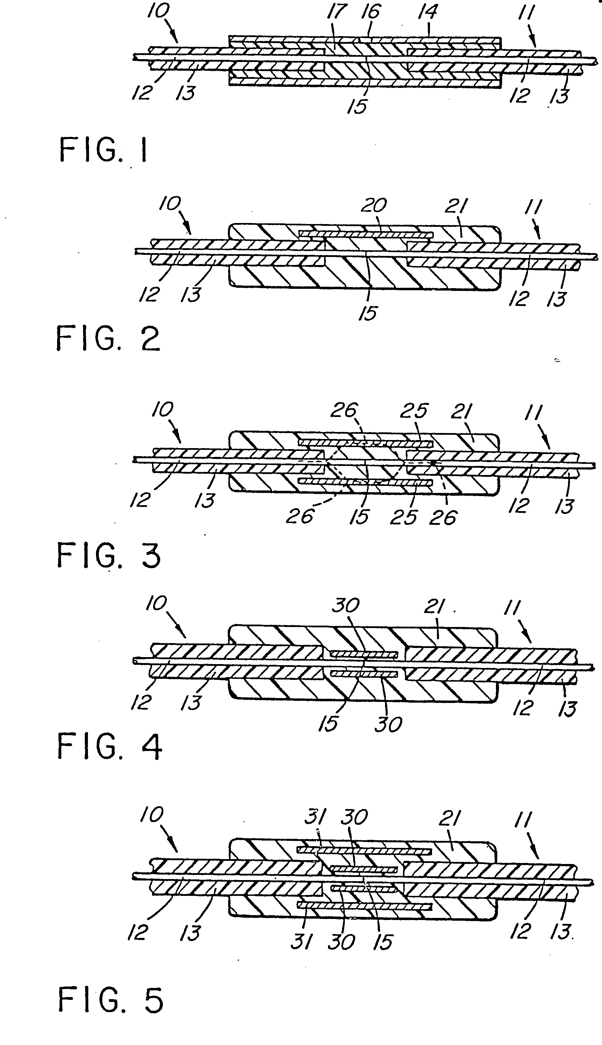

Figure 1 illustrates a completed or reinforced splice, in which two optical fibers indicated generally at 10 and 11, each composed of a glass fiber 12 with a plastic coating 13. The plastic coating is normally applied at the time the fiber is drawn, for protection and to make handling easier. In preparation for splicing, the coating 13 is removed for a short distance at the fiber ends, leaving a length of fiber 12 exposed. The fiber ends are prepared, by any conventional means, such as by making a scratch on the fiber and simultaneously applying bending and for tension. The ends may also be ground or otherwise treated, to give flat end faces. The fibers are then brought end-to-end in alignment and fused, as by an arc.

As previously stated, removing the coating reduces the strength of the fiber, believed to be because of the presence of surface abrasions, crazes, and other imperfections becoming effective. This can result in a reduction of the strength of the fiber to about 20% of the virgin fiber, that is as drawn. The virgin fiber generally has a strength of about 500 Ksi. Fusing the ends of the fibers together further reduces the strength, to as low as about 5% of that of the virgin fiber. For commercial use it is desirable to increase the strength to at least about 50 Ksi, i.e. about 10% of that of the virgin fiber. In Figure 1 the spliced fibers are fed through a metal sleeve 14, which overlaps the coating 13. The fusion splice position is indicated at 15. The sleeve 14 has an aperture 16 approximately at its center and a synthetic resin is injected, indicated at 17. The resin is preferably thermo-setting, and should adhere both to the fibers 12 and the sleeve 14 and be compatible with, and adhere to, the coating 13.

The completed reinforced splice of Figure 1 is rather rigid and this has certain disadvantages for factory splicing. After splicing, the fiber is usually made up into cables and in doing so is fed from spools through a lead-in member, generally referred to as a needle, and the fiber passes through an aperture in the needle - usually referred to as the needle eye. This imposes both limitations on outside diameter of the splice and the need for some flexibility. The diameter of the splice as in Figure 1 is acceptable but the flexibility is limited. The arrangement of Figure 1 gives high strength, well above 10% of the virgin fiber, up to about 50% of that of the virgin fiber. However, it is a time consuming method.

Figure 2 illustrates an alternative arrangement in which a metal filament or rod 20 is used as a splint to reinforce the splice. In this arrangement, as for the arrangements to be described, the splice and splint is encased in a synthetic resin 21, which is molded about the splice and splint. The arrangement of Figure 2 has improved flexibility and meets the outside diameter requirements. However, the difference in thermal expansion of the metal splint 20 and the glass fiber 12 can be such as to introduce undesirable stresses in the splice.

Figures 3, 4 and 5 illustrate various arrangements of splice reinforcement by splints formed by short lengths of glass fiber, conveniently being short lengths of the same fiber as the fibers 12 being spliced. Figure 3 is for a fiber having one diameter of coating while Figures 4 and 5 are for an alternative, larger, diameter coating, giving an increased thickness as compared to that in Figure 3. The same references are used in Figures 3, 4 and 5 as in Figures 1 and 2, for the same items.

Figure 3 illustrates a splice in which two glass fiber splints 25 are used. The splints overlap the ends of the coatings 13. As in previous examples, the resin 21, usually thermosetting, should be such that there is very good adhesion between resin and fibers 12 and splints 25, and also have good adhesion with, and be compatible with, the coatings 13. Instead of two splints, a single splint, as in Figure 2, can be used.

Figures 4 and 5 are concerned with reinforcing splices made with fibers having a coating 13, of the larger, alternative diameter. It is useful to consider what is believed to be the situation concerning stress transfer in the splices. In the arrangements of Figure 2 and 3, the stresses are transferred from the fibers 12 either side of the join 15 through the splint or splints 20 and 25. With the relatively thin coatings 13 in Figures 2 and 3 this is readily obtained with the splints overlapping the coatings. A typical stress transfer pattern is illustrated in Figure 3 by the arrows 26. However, with the increased diameter thickness of the coating 13, as in Figures 4 and 5, this transfer is not so effectively obtained with splints overlapping the coating. It is believed that this is because of the increased thickness of resin 21 between fibers 12 and splints.

In Figure 4, splints 30 are provided, typically being short lengths of the same fiber as is being spliced, with the splints fitting between the coated portions of the fibers. This provides for good stress transfer between fibers 12 and splints 30. In Figure 5, in addition to short splints 30, as in Figure 4, longer splints 32, again of lengths of fiber, overlap the coated portions of the fibers. In both Figure 4 and Figure 5, only a single fiber 30, and a single fiber 31, may be provided.

The minimum length of the splints, and in particular the splints 30, is determined by the length of each fiber 12 either side of the join 15, affected by the heat of fusion. There is what is termed a heat fault zone on either side of the join 15. It is necessary that the splints extend beyond the heat fault zones. The Figures 1 to 5 are drawn to a very large scale, for clarity, and typical dimensions are about .005" to .007" for the diameter of the diameter of the fibers 12, about .010" diameter over the coating 13 in Figures 2 and 3 and about .013" diameter over the coating 13 in Figures 4 and 5. The overall diameter of the resin 21 is about .019" in Figures 2 and 3 and about .025" in Figures 4 and 5. In such examples, the heat zone extends for about 2 to 3mm either side of the join 15. The distance from the ends of the coated portions to the join is of the order of twice this, for example 6mm, or slightly more, that is about 12mm between the ends of the coated portions.

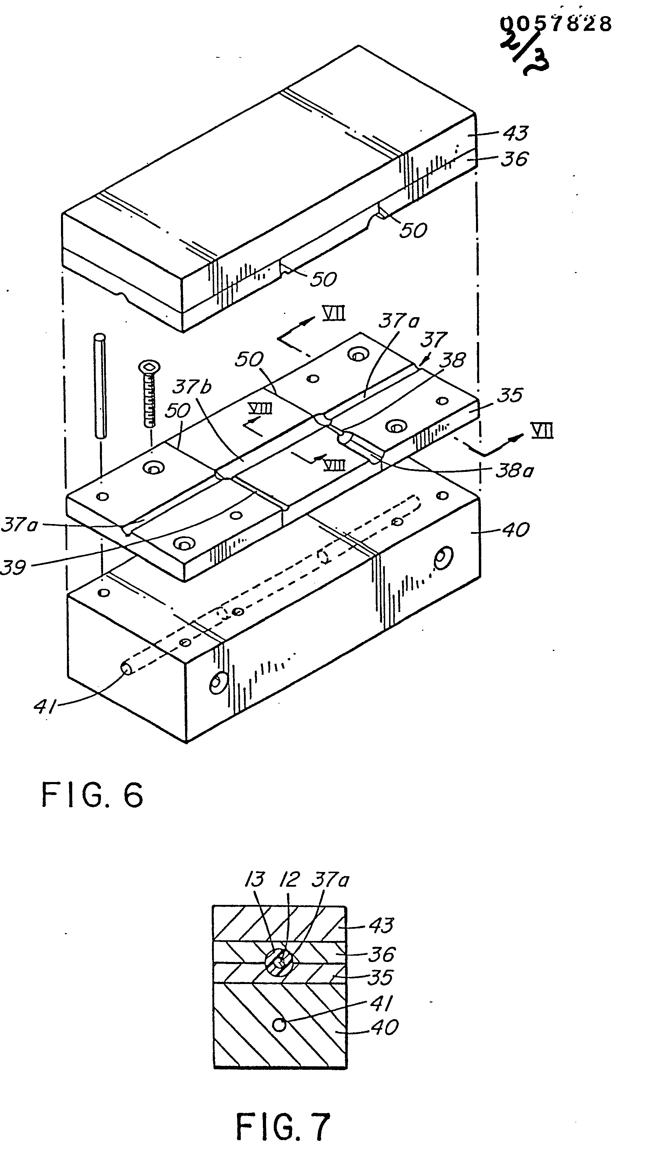

Figure 6 illustrates one form of tool for molding the synthetic resin around fibers and splints. The tool comprises basically two opposed members 35 and 36, the top face of member 35 being clearly seen. The bottom face of member 36 is a mirror image of the top face of member 35. In the top face of member 35 is a longitudinal semi-cylindrical groove 37, in three parts, end parts 37a of a diameter to be a fairly tight fit on the coated portions of fibers and a center part 37b of a larger diameter for the molding of resin around fibers and splints. The center part 37b connects to end parts 37a via a radius or a taper and at the ends of the center part there are two lateral grooves 38 and 39. Groove 38 is the inlet for resin and has an enlarged bore 38a at its outer end for reception of the nozzle of a resin injector, such as a syringe. Groove 39 is a vent and, in use, resin is injected through inlet 38 until it issues from vent 39. The member 35, in the example illustrated, is bolted to a base 40 having a longitudinal bore 41 into which a heater can be inserted. Dowels 42 align member 35 with the base 40, and also align the member 36 with member 35. Member 36 is bolted to a top 43, again aligned with dowels, not seen. Figure 7 illustrates the members 35, 36, 40 and 43 in assembled condition, with a coated portion of a fiber in the groove 37.

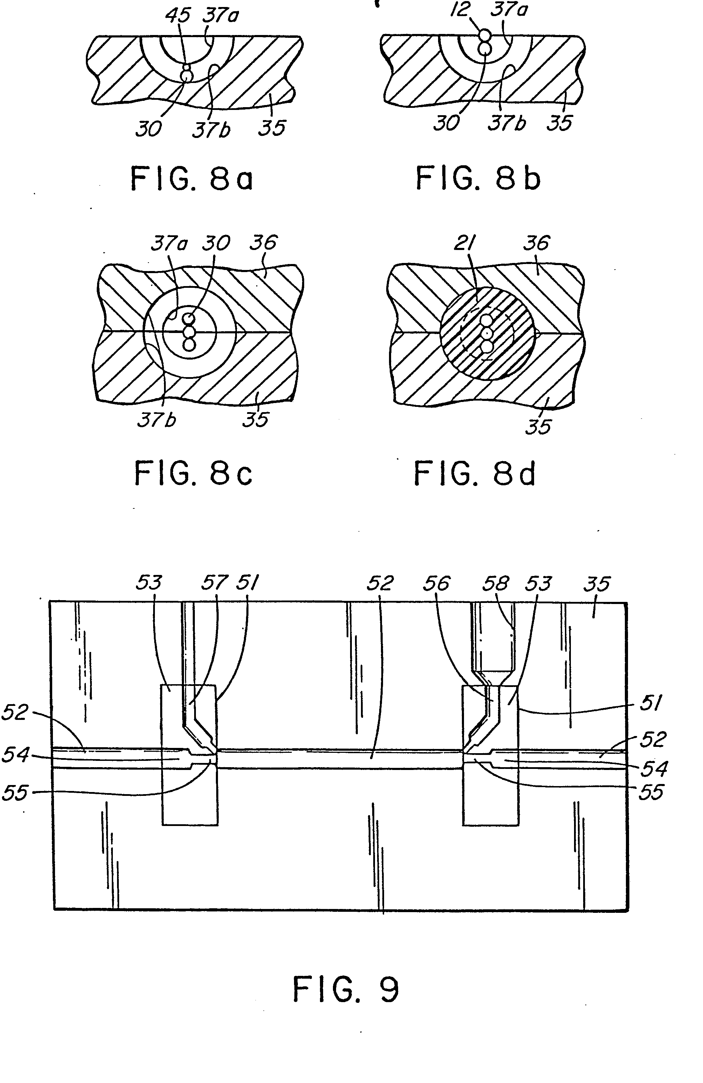

Figures 8(a) to 8(d), in conjunction with Figure 6, illustrate the method of carrying out the positioning of spliced fibers and a splint or splints in the tool, and the resin moulding, for fibers, to produce a reinforced splice as illustrated in Figure 4.

First, a splint 30 is placed in the bottom of the center part 37b of groove 37 in member 35. One or more beads of resin are put on the splint, as indicated at 45. This is as in Figure 8(a). A pair of spliced fibers are then placed in the groove 37, being pushed down and the uncoated portions of the fibers touch the head or beads of resin. Surface tension causes the bead to spread and lift up the splint 30. The condition is then as in Figure 8(b). One or more beads of resin are then put on the fibers and a second splint 30 positioned on the bead or beads.

The member 36 is then placed on top. This is as illustrated in Figure 8(c). Finally synthetic resin is injected to fill the cavity formed by the central part 37b of groove 37. This is as in Figure 8(d). Hardening or setting of the resin is usually speeded up by heating the tool. After the required time, a few minutes, the member 36 is removed and the resin encased reinforced splice removed from the member 35. The injection sproule from groove 38 and vent sproule from groove 39 are removed.

If only one splint 30 is provided, it can be the bottom one in Figure 8, or the top one. The resin beads used to preposition the splints is the same resin as is injected. The resin spaces the splints a small distance away from the fibers 12. The spliced fibers are moved axially to and fro in the groove 37 prior to clamping down member 36. This ensures that the splint or splints 30 are correctly positioned in the gap between the ends of the coated portions of the fibers 10 and 11.

If long and short splints are to be used, as in Figure 5, a long splint 31 is first positioned in the center part 37b of the groove 37. Then one or more beads of resin are put on the splint and a short splint 30 placed on top. One or more beads of resin are put on the splint 30 and then the spliced fibers positioned in the tool. Then, after putting on one or more beads of resin on the fibers a short splint is positioned on top, one or more beads of resin put on the short splint, and then a long splint positioned on top. This is followed by placement of the member 36 and injection of resin.

The coating 13 is removed from a fiber, prior to splicing, by any conventional method, i.e. mechanical stripping, solvent stripping, or a combination of both. As stated, the resin used must give good adhesion to the fibers 12 and the splints and must be compatible with and adhere to the coatings 13.

The tool of Figure 6 can be difficult to make, with the different sizes for the parts of the grooves 37. Therefore, the members 35 and 36 are made in three parts, separated along the lines 50.

The members 35 and 36 can be made as single pieces, and in this case, member 35 can be integral with the base 40, and similarly member 36 can be integral with top 43.

Figure 9 illustrates an alternative way of forming the members 35 and 36, member 35 being shown. Two recesses 51 are formed in the member, and a single semi-cylindrical groove 52 machined along the top face. This groove is the diameter for the center part, for the resin molding part. In the recesses 51 are inserted inserts 53. Each insert has a transverse groove in two parts, a large diameter part 54 which matches with groove 52 and a smaller diameter part 55 which is a tight fit on a coated fiber. An inlet groove 36 and vent or outlet groove 57 connect with the transition positions of the smaller grooves 55 where they meet with the under part of groove 52. The inlet groove 56 connects to an enlarged bore 58 which receives the injector for the resin. The use of a tool as in Figure 9 is the same as for the tool in Figure 6.

Reinforced splices, as in Figure 4, with one and two splints, have given strengths of up to and even exceeding 175 Ksi, and with quite a limited variation in range. Generally, results in the 80 - 160 Ksi range are obtained, with the majority being in the 140 - 150 Ksi range. These results were obtained with Celanese 50727 epoxy resin system. By using other resin systems higher values can be obtained. The parameters relating to the resin have already been stated.

The splices are relatively flexible, give good stress transfer across the fusion zone and pass readily through the needle eye when laying into a cable core. While more particularly intended for factory splicing, the same process, and tool, can be used in the field for splicing fibers already in cables. Here the flexibility is not so important, but the stress transfer is and also the avoidance of induced stresses by using splints of the same material as the fibers themselves.

CLAIMS

1.  A reinforced optical fiber splice having a pair of glass optical fibers fused in end-to-end alignment, each fiber having a plastic coating removed a predetermined distance from the end, characterized by at least one splint 14, 20, 25, 30, 31, extending axially on either side of the fusion position 15, the fused fibers 12 and splint 14, 20, 25, 30, 31, being interconnected by a synthetic resin 17, 21.

2.  A splice as claimed in claim 1, characterized by the splint 14, 20, 25, 31, overlapping the coating 13 on each fiber 10, 11.

3.  A splice as claimed in claim 1 or 2, characterized by the splint 20, 25, 30, 31 and the fibers 10, 11, being encased in a synthetic resin 21.

4.  A splice as claimed in claim 1, characterized by the splint 30 being positioned between the end surfaces of the plastic coating 13.

5.  A splice as claimed in claim 4, characterized by at least one further splint 31 overlapping the coating 13 on each fiber 10, 11.

6.  A splice as claimed in any one of the preceding claims, characterized by the splint 20, 25, 30, 31 being a length of uncoated glass fiber.

0057828

7. A splice as claimed in claim 3, characterized by two splints 25, 31, overlapping the coating 13 on each fiber 10, 11, the splints 25, 31, on diametrically opposite sides of the fused fibers.

8. A splice as claimed in claim 4 characterized by two splints 30 positioned between the ends of the plastic coating 13 the splints 30 being on diametrically opposite sides of the fused fibers 12.

9. A splice as claimed in claim 8, characterized by two further splints 31 overlapping the coating 13 on each fiber, the further splints 31 being on diametrically opposite sides of the fused fibers, all the splints 30, 31 in substantially the same plane.

10. A splice as claimed in claim 1, characterized by the splint 20, 25, 30, 31, comprising a rod-like element.

FIG. 1

FIG. 2

FIG. 3

FIG. 4

FIG. 5

FIG. 6

FIG. 7

0057828

3/3

FIG. 8a

FIG. 8b

FIG. 8c

FIG. 8d

FIG. 9

European Patent Office

**EUROPEAN SEARCH REPORT**

Application number

EP 82 10 0312.6

## DOCUMENTS CONSIDERED TO BE RELEVANT

| Category | Citation of document with indication, where appropriate, of relevant passages | Relevant to claim |
|---|---|---|
| X | <u>DE – A1 – 2 926 678</u> (AEG–TELEFUNKEN) <br> * claims 1 to 5; page 6; fig. 1 to 4 * <br> -- | 1-10 |
| A | Patent Abstracts of Japan <br> Vol. 2, No. 137, 15 November 1978 <br> page 8472E78 <br> & JP – A – 53 – 104252 <br> -- | 1 |
| A | <u>US – A – 4 196 965</u> (K. MATSUNO) <br> * column 2, lines 3 to 15 * <br> -- | |
| A | <u>GB – A – 2 041 566</u> (N.V. PHILIPS') <br> * whole document * <br> ---- | |

**CLASSIFICATION OF THE APPLICATION (Int. Cl. 3)**

G 02 B 7/26

**TECHNICAL FIELDS SEARCHED (Int.Cl. 3)**

G 02 B 7/26

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 22-04-1982 | FUCHS |

EPO Form 1503.1 08.78